# EUROPEAN PATENT APPLICATION

(11) **EP 1 976 263 A1**
(43) Date of publication of application: **01.10.2008**
(21) Application number: 08003278.2
(22) Date of filing: 22.02.2008
(51) Int. Cl.: H04N 1/56

(54) **Image processing apparatus and method for detcting a background color**

(30) Priority: 26.03.2007 JP 2007078914
(71) Applicant: Murata Machinery, Ltd., Minami-ku Kyoto-shi Kyoto 601-8326 (JP)
(72) Inventor: Minamino, Katsushi, Kyoto-shi Kyoto 612-8686 (JP); Nishioka, Naoki, Kyoto-shi Kyoto 612-8686 (JP)
(74) Representative: Zimmermann, Tankred Klaus

(57) **Abstract**

Based on image data of a colormetric system in which a brightness component and a color component are separated, a color plane for defining the color component is divided into a plurality of color areas, and when each area of the plurality of color areas is set as a single area, the number of elements of the image data belonging to the single area is counted. Then, an area constituted of mutually adjacent plurality of color areas of the plurality of color areas is set as a multiple area, and the number of elements of the image data belonging to each area of the multiple area is counted, and the color area in which the number of elements of the image data belonging to this area exceeds a first threshold value is extracted. Then, a positive evaluation is given to this color area, and the multiple areas in which the number of elements of the image data belonging to this area exceeds a second threshold value is extracted, and the positive evaluation is given to a plurality of color areas included in the multiple area. Then, the color area, with the positive evaluation given to the single area and the positive evaluation given to the multiple area, is specified as the color area of background color.

## Description

### CROSS-REFERENCE TO RELATED APPLICATIONS

This application claims priority to Japanese Patent Application No. 2007-078914, filed on. March 26, 2007, which application is hereby incorporated by reference in its entirety.

### BACKGROUND OF THE INVENTION

### 1. Field of the Invention

The present invention relates to an image processing apparatus having a function of detecting a background color of a document, and a method for detecting the background color of the document.

Note that a "brightness" specified in this specification includes a "luminance", being the brightness as a photometric quantity (such as component Y in an YCbCr colormetric system) and a "lightness", being the brightness as a perceptive color (such as component L in an L*a*b* colormetric system). In addition, a "color" is a component separated from the "brightness" in a three-dimensional color space, and for example, Cb component and Cr component (color difference component) in the YCbCr colormetric system and component "a" and component "b" in the L*a*b* colormetric system correspond to this "color".

### 2. Description of Related Art

An image processing apparatus like a facsimile machine, a copying machine, and a printer, for applying each kind of processing to image data acquired by scanning a document, includes a device capable of selecting a processing mode according to a color of the image data to be processed. For example, in a case of a color image, the aforementioned image processing apparatus applies processing to the image data in the processing mode suitable for the color image, and in a case of a monochrome document, applies processing to the image data in the processing mode suitable for the monochrome image. Thus, by switching the processing mode, the image processing apparatus can perform suitable processing according to the color of the document.

In order to select the processing mode by the image processing apparatus, the color of the document must be discriminated. Therefore, a document color discriminating function (so-called ACS (auto color selection) function) for automatically discriminating whether the document is color or monochrome, is conventionally devised.

In order to discriminate whether the document is color, or black and white, for example, a*b* plane of L*a*b* uniform color space in the image processing apparatus is divided into 25 rectangle areas. Then, the image processing apparatus discriminates whether the image data is color or monochrome based on which area data of a pixel included in the image data to be processed belongs.

For example, in the image processing apparatus, the color discriminated by an area of a maximum count number of the pixel data belonging to each area on the a*b*plane, is set as a background color, and this area can be specified as the area of the background color.

### BRIEF SUMMARY OF THE INVENTION

However, as described above, in a structure that the pixel data belonging to each area of the a*b*plane is counted, for example, when image data of background color are distributed over a plurality of areas, the count number of each area is dispersed, thus decreasing the count number itself. Accordingly, there is a possibility that another area is erroneously specified as the area of the background color.

In addition, in a mode that the area is set in the vicinity of an original point of the a*b*plane (namely, achromatic axis), when the image data attributable to the background color are not distributed in the vicinity of the original point (namely, when distributed outside of the 25 rectangle areas), there is also a problem that a correct background color area can not be detected.

In view of the above-described circumstances, the present invention is provided, and an object of the present invention is to provide an image processing apparatus and a background color detecting method, capable of detecting existence/nonexistence of the background color with a simple structure, based on the image data of a colormetric system in which a brightness component and a color component are separated, and when there is a background color, capable of easily and accurately detecting this color.

In addition, there is provided the image processing apparatus and the background color detecting method capable of accurately detecting the color of the background color, even when the image data attributable to the background color are not distributed in the vicinity of the original point.

A first aspect of the present invention provides an image processing apparatus having a function of detecting a background color of a document based on image data of a colormetric system in which a brightness component and a color component are separated, and in this image processing apparatus, a color plane for defining the color component is divided into a plurality of color areas, the number of elements of the image data belonging to each of the plurality of color areas is counted, a color area, in which the number of elements of the image data belonging thereto exceeds a first threshold value, is extracted, and a positive evaluation is given to this color area. The area constituted of a plurality of mutually adjacent color areas of a plurality of color areas is set as a multiple area, and the number of elements of the image data belonging to each area of the multiple area is counted. The multiple area in which the number of elements of the image data belonging thereto exceeds a second threshold value is extracted, then the positive evaluation is given to the plurality of color areas included in the multiple area, and the color area, to which the positive evaluation is given, is specified as the color area of the background color.

A second aspect of the present invention provides the image processing apparatus having the function of detecting the background color of the document based on the image data of the colormetric system in which the brightness component and a color component are separated, wherein the color plane for defining the color component is divided into a plurality of color areas, and the number of elements of the image data belonging to each of the plurality of color areas is counted. The color area, in which the number of elements of the image data belonging to this area exceeds the first threshold value, is extracted, and the positive evaluation is given to this color area. Based on the counted number of elements, the number of elements of the image data is counted, the image data belonging to each area of the multiple area, being the area constituted of a plurality of mutually adjacent color areas of the plurality of color areas. The multiple area, in which the number of elements of the image data belonging thereto exceeds the second threshold value, is extracted, and the positive evaluation is given to the plurality of color areas included in the multiple area, and the color area, to which the positive evaluation is given, is specified as the color area of the background color.

According to a third aspect of the present invention, the plurality of color areas are radially arranged around an achromatic axis of a color plane.

According to a fourth aspect of the present invention, each of the plurality of color areas belongs to arbitrary two color areas of the multiple area.

According to a fifth aspect of the present invention, the image data belonging to the color area of the background color is extracted as background color image data out of the image data acquired by scanning a prescribed area of the document, and a maximum value of the values of the color component of the background color image data is specified as the maximum value of the color component of the background color, and a minimum value of the values of the color component of the background color image data is specified as the minimum value of the color component of the background color.

According to the present invention, when the color area of the background color is specified out of the plurality of color areas defined on the color plane for defining the color component, whether or not each color area is the color area of the background color is discriminated, in consideration of not only the number of elements of the image data belonging to each color area, but also the number of elements of the image data belonging to the area (multiple area) constituted of the color area and the color area adjacent to this color area. Accordingly, the background color can be easily and accurately detected, even when the image data of the background color are distributed over a plurality of color areas. In addition, the plurality of color areas can be specified as the color areas of the background color. That is, the color of the background can be easily and accurately detected.

Particularly, according to the first to fifth aspects, the number of elements of the image data belonging to each color area is counted, and the number of elements of the image data belonging to each area of the multiple area is counted. Therefore, the number of elements belonging to each area can be promptly counted. Accordingly, a speed of detecting the background color can be improved.

Particularly, according to the third aspect, a plurality of color areas are radially arranged around the achromatic axis of the color plane. Therefore, wherever the image data attributable to the background color are distributed in the color plane, hue of the background color can be accurately detected.

Particularly, according to the fifth aspect, the image data belonging to the color area of the background color is extracted as the background color image data, and based on the value of the color component of the background color image data, the maximum value and the minimum value of the color component of the background color is specified. Therefore, the color component area of the background color can be accurately and easily specified.

Other features, elements, processes, steps, characteristics and advantages of the present invention will become more apparent from the following detailed description of embodiments of the present invention with reference to the attached drawings.

### BRIEF DESCRIPTION OF THE DRAWINGS

Fig. 1 is a block diagram illustrating a structure of a digital multifunction peripheral according to an embodiment of the present invention;

Fig. 2 is a view schematically illustrating a beginning area of the areas obtained by dividing a document into a plurality of areas;

Fig. 3 is a block diagram illustrating the structure for discriminating a background color;

Fig. 4 is a flow chart illustrating a background color discrimination processing;

Fig. 5 is a view schematically illustrating a color plane;

Fig. 6A is a view explaining the background color discrimination processing;

Fig. 6B is a view explaining other example of the background color discrimination processing;

Fig. 7 is a block diagram illustrating the structure for discriminating the background color; and

Fig. 8 is a flow chart illustrating the background color discrimination processing.

### DETAILED DESCRIPTION OF THE INVENTION

[First embodiment]

### <1. Structure>

### <1-1.Digital multifunction peripheral>

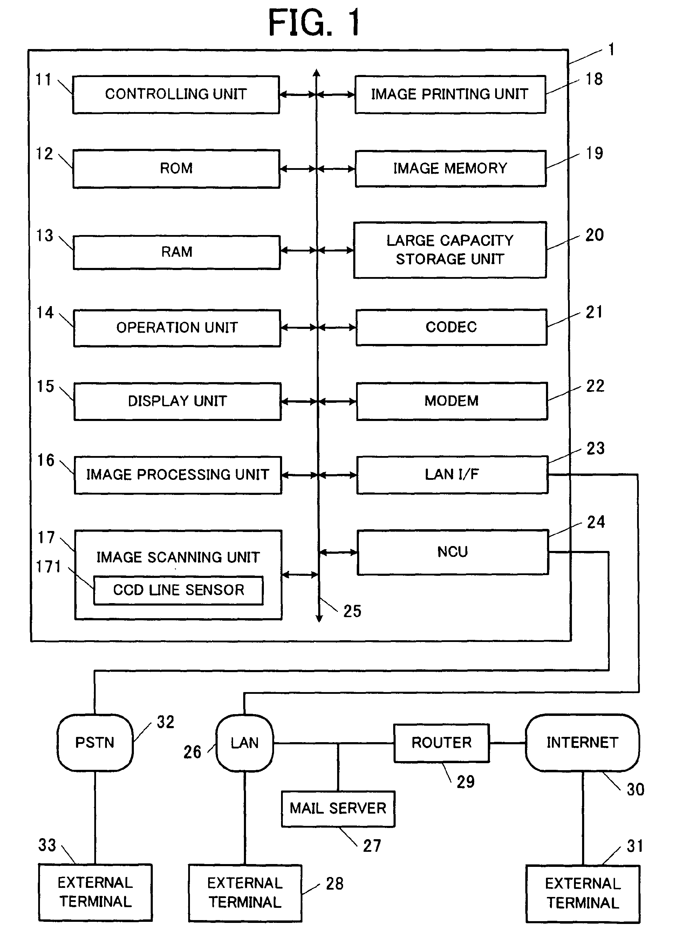

Explanation will be given for a structure of a digital multifunction peripheral (digital MFP)1 incorporating a function of an image processing apparatus corresponding to a first embodiment of the present invention, with reference to Fig. 1. Fig. 1 is a block diagram illustrating a structure of the digital multifunction peripheral 1 according to the first embodiment of the present invention.

The digital multifunction peripheral 1 is constituted as a multifunction peripheral having a plurality of functions such as a facsimile function, a copy function, a scan function, and a print function. The digital multifunction peripheral 1 has a structure of electrically connecting thereto a controlling unit 11, a read only memory (ROM) 12, a random access memory (RAM) 13, an operation unit 14, a display unit 15, an image processing unit 16, an image scanning unit 17, an image printing unit 18, an image memory 19, a large capacity storage unit 20, and communication units 21 to 24, via a bus line 25.

The controlling unit 11 is constituted of a central processing unit (CPU). The controlling unit 11 controls the aforementioned each unit of hardware based on a program stored in the ROM12, and functions as the digital multifunction peripheral 1.

The ROM 12 is a storage device, being a read-only device that previously stores the program and data necessary for controlling the digital multifunction peripheral 1.

The RAM 13 is the storage device, serving as a reading/writing capable device, and temporarily stores various temporarily accumulated data such as image data, telephone number, mail address, and data generated at the time of arithmetic process by the controlling unit 11. The RAM 13 is constituted of a static RAM (SRAM), etc.

The operation unit 14 is constituted of each kind of keys such as letter key, ten key, and function key, and receives an operation of a user such as an input of a command and text data. The operation of the user received by the operation unit 14 is inputted in the controlling unit 11 as a signal. The controlling unit 11 controls an action of each unit, based on the operation of the user.

The display unit 15 serves as a display device that displays an operation state of the digital multifunction peripheral 1 and the image data, etc, and is constituted of the display device such as a liquid crystal display. Note that each kind of keys formed in the operation unit 14 may be realized by a touch screen disposed on a display of this display unit 15.

The image processing unit 16 serves as a processing unit that applies various kinds of image processing to the received image data and the image data acquired from the image scanning unit 17. For example, the image scanning unit 16 serves as an analog-to-digital converter (A/D), and performs image processing such as each kind of correction processing (such as shading correction) and gamma correction), conversion processing of the colormetric system (such as processing of converting the image data of RGB colormetric system to the image data of YCbCr colormetric system by a matrix operation process), color adjustment, and compounding of the image. Note that the image processing unit 16 is a unit that may be realized by software, by executing the program stored in the ROM 12.

The image scanning unit 17 serves as a scanner for scanning the image on the document by a scanning element (a charge coupled device (CCD) line sensor 171) . The image data acquired by the image scanning unit 17 is, for example, compressed by a Joint Photographic Experts Group (JPEG) system, by a coder and decoder (CODEC) 21, and is stored in the image memory 19. Note that the image scanning unit 17 may also be the scanner of a Flat Bed Scanner (FBS) system which is a type of reading the image by scanning the surface of the document placed on a document platen by a scanning element. In addition, the image scanning unit 17 may also be the scanner of an ADF system which is a type of feeding the document placed on a document tray (not shown) by an Auto Document Feeder (ADF) and reading the image by scanning the surface of a fed document by a static scanning element.

Also, the ADF system includes a system in which a moving document is read by a static scanning optical system (sheet through system), and a system in which a static document is read by a moving scanning optical system. However, either system may be adopted. When the latter system is adopted, the image scanning unit 17 repeats a reading procedure in which the document is fed on a glass base and placed on the glass base in a static state, then the static document is read by the moving scanning optical system, and the document that has gone through reading processing is ejected.

The CCD line sensor 171 generates the image data expressed by an RGB color space, namely, the image data (RGB image data) having color component data of red (R), green (G), and blue (B), by receiving the light guided from the scanning optical system scanning the document at a prescribed scanning speed (a relative moving speed of the document and the scanning optical system), and repeating scanning at a constant cycle. Note that, the scanning speed of the scanning optical system is set based on a resolution of the image data generated by the CCD line sensor 171 (more specifically, the resolution in a sub scanning direction). That is, as the resolution in the sub scanning direction becomes higher, the scanning speed of the scanning optical system is set low, and as the resolution in the sub scanning direction becomes lower, the scanning speed of the scanning optical system is set high.

The image printing unit 18 serves as a printer that prints the image data, etc, stored in the image memory 19, on a printing paper. For example, the printer of an electrophotographic method can be used in the image printing unit 18.

The image memory 19 serves as a storage device for temporarily storing the image data received from external devices 28, 31, 33 through a local area network interface (LANI/F) 23 and a network control unit (NCU) 24, the image data acquired in the image scanning unit 17, and the image data subjected to processing in the image processing unit 16. The image memory 19 is constituted of a memory such as a dynamic RAM(DRAM) into which and from which writing and reading are possible.

The large capacity storage unit 20 is constituted of a hard disc, etc. The image data processed by the image scanning unit 17 can be stored in the large capacity storage unit 20.

Further, the digital multifunction peripheral 1 has a structure of electrically connecting thereto a CODEC 21 that encodes/decodes the image data, etc, correlated to a plurality of protocols; a modem 22 that modulates transmitted data and demodulates received data; a LANI/F 23 corresponding to an interface with a LAN 26; and an NCU 24 that connects and releases a telephone line, via the bus line 25.

Note that as an encoding system by the CODEC 21, any one of the systems such as Modified Huffman (MH), Modified READ (Relative Address Designate) (MR), Modified MR(MMR), and Joint Bi-level Image experts Group (JBIG) is used for encoding binary data. Note that the CODEC 21 also conducts encoding of multi-level data. The encoding of the multi-level data is conducted, for example, by the JPEG system.

Next, a communication environment of this digital multifunction peripheral 1 will be explained. The digital multifunction peripheral 1 is connected to the LAN 26. A mail server 27 and an external terminal 28 are connected to the LAN 26. In addition, the LAN 26 is connected to Internet 30 via a router 29, etc. With this structure, the digital multifunction peripheral 1 can perform electronic mail communication with the external terminal 28 connected thereto via the LAN 26, and an external terminal 31 connected thereto via the Internet 30.

Further, the digital multifunction peripheral 1 is connected to a Public Switched Telephone Network (PSTN)32, being a data communication network for analog lines. Thus, the digital multifunction peripheral 1 can perform communication with an external terminal 33 connected thereto via the PSTN 32. The external terminals 28, 31, 33 correspond to a personal computer having a modem connected thereto, the same device as the digital multifunction peripheral 1, a telephone set, a mobile telephone, and a facsimile machine, etc.

### <1-2. Color discriminating function>

The digital multifunction peripheral 1 has a function (so-called auto color selection (ACS) function) of discriminating the color of the image data of multi-level (such as the image data of the document scanned by the image scanning unit 17).

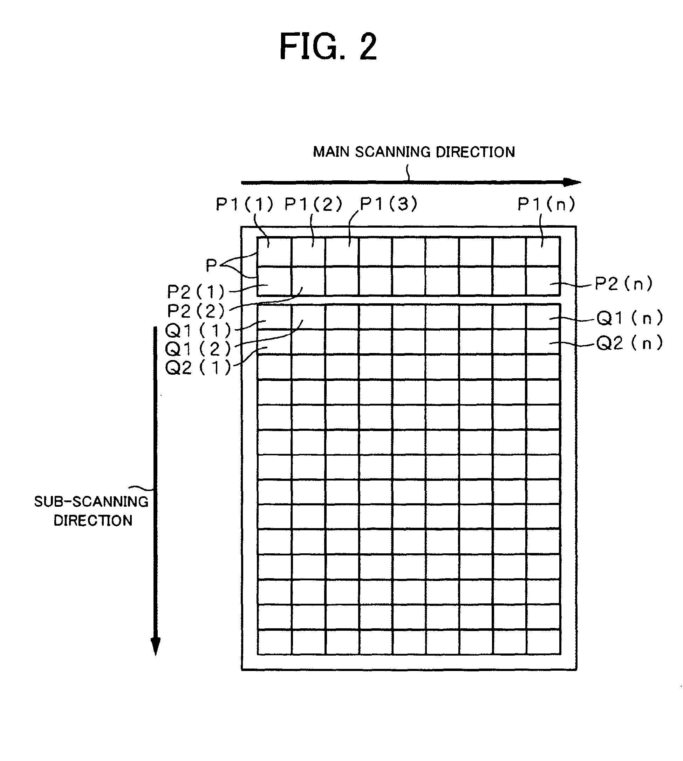

In this color discriminating function, first, the background color of the document is detected. More specifically, as shown in Fig. 2, the background color of the document is detected based on the image data acquired by scanning beginning areas P1 (1) to P1 (n), P2 (1) to P2(n) of the areas obtained by dividing the document into a plurality of areas.

Then, a detection result of the background color is received, and based on the image data acquired by reading further subsequent block areas Qi(i= 1, 2, ..), the color of the document is discriminated. That is, whether the document shows a color image, a gray scale image, a bi-level image, or a white paper (color paper) is discriminated. More specifically, a color area of a previously detected background color is masked and a color distribution of the image data is prepared. Then, based on this color distribution, the color of the document is discriminated. For example, in a case of the document, with black letter written on a yellow color base, the color area of the detected background color is masked and the color distribution of the document is prepared. Then, the color distribution of only black color that exists on the document can be obtained. Accordingly, the document can be discriminated not to be color but to be monochrome.

The aforementioned color discrimination result is received, and the digital multifunction peripheral 1 selects the processing mode for processing this image data. For example, when the document is discriminated to show a color image, the processing is executed, with the processing mode set in a "color mode", and when the document is discriminated to show a gray image or the bi-level image, the processing is executed, with the processing mode set in a "monochrome mode". By changing an operation mode according to a color discrimination of the document, an operation efficiency of the device can be improved, and appropriate processing according to the kind of the color of the image can be executed.

When the processing of acquiring the image data is executed in the color mode, the image processing unit 16 acquires the image data by converting multi-level YCbCr image data of the document (namely, multi-level RGB image data acquired by scanning the document by the image scanning unit 17) to multi-level YCbCr image data (image data expressed by YCbCr color space) . Then, the CODEC 21 compresses this image data by the JPEG system, etc, and stores it in the image memory 19.

When the image data is acquired in the monochrome mode, first, a luminance component Y of the multi-level YCbCr image data of the document is binarized by the image processing unit 16. However, in this binarizing process, when the document is a gray document, an error diffusion method and an ordered dither method, etc, are used, and when the document is a black and white document, a simple binarizing method is used. Then, the CODEC 21 compresses binarized luminance component Y of the YCbCr image data by the MMR system and stores it in the image memory 19.

When printing of the image data is executed in the color mode, first, the image processing unit 16 converts the multi-level YCbCr image data of the document to the multi-level CMYK image data (the image data expressed in the CMYK color space), and further binarizes the obtained multi-level CMYK image data to bi-level CMYK image data. Subsequently, based on the obtained bi-level CMYK image data, the image printing unit 18 forms the image on the printing paper. More specifically, by using necessary engine out of image forming engines of "Y", "M", "C", "K" (a necessary image forming engine for expressing the color included in the image), image formation is conducted on the printing paper.

When a printing process of the image data is executed in the monochrome mode, first, the image processing unit 16 binarizes the luminance component Y of the multi-level YCbCr image data of the document. Subsequently, based on the obtained bi-level image data, the image printing unit 18 forms a monochrome image on the printing paper, by using the image forming engine of "K".

### <1-3. Structure regarding background color discrimination>

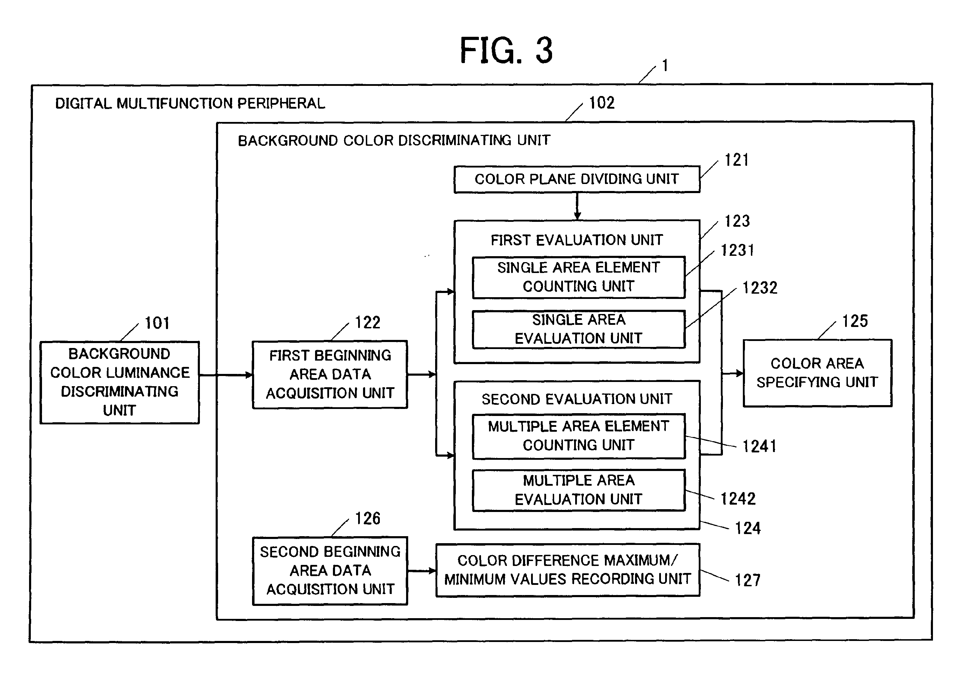

A background color discriminating function in the digital multifunction peripheral 1 will be explained, with reference to Fig. 3. Fig. 3 is a block diagram illustrating the structure regarding the background color discrimination. As the structure regarding the background color discrimination, the digital multifunction peripheral 1 includes a background color luminance discriminating unit 101 that detects a brightness component of the background color (more specifically, the maximum value and the minimum value of the luminance component (component Y) of the background color in the YCbCr color space are detected), and a background color difference discriminating unit 102 that detects a color component of the background color (more specifically, the maximum value and the minimum value of the color difference component (component Cb and component Cr) of the background color in the YCbCr color space are detected). A background color area in the YCbCr color space is detected, by the area of the luminance of the background color detected by the background color luminance discriminating unit 101 and the area of color difference of the background color detected by the background color difference discriminating unit 102. Note that each function unit is a constitutional element realized by executing the program by the controlling unit 11.

<Background color luminance discriminating unit> The background color luminance discriminating unit 101 detects a brightness component of the background color based on the image data of the beginning areas P1(1) to P1(n), P2(1) to P2(n) (see Fig. 2). More specifically, the histogram showing a distribution of the luminance of the image data of the beginning areas P1(1) to P1(n), P2(1) to P2(n) is prepared, and the image data belonging to a class in which the frequency exceeds a prescribed threshold value (more specifically, the image data newly counted as the data belonging to this class after the frequency exceeds a prescribed threshold value) is detected as the data attributable to the background color of the document (background color image data), and the luminance component of this data is recorded as the maximum value (or minimum value) of the luminance of the background color (background color luminance).

### <Background color difference discriminating unit>

The background color difference discriminating unit 102 has a color plane dividing unit 121, a first beginning area data acquisition unit 122, a first evaluation unit 123, a second evaluation unit 124, a color area specifying unit 125, a second beginning area data acquisition unit 126, and a color difference maximum/minimum value recording unit 127.

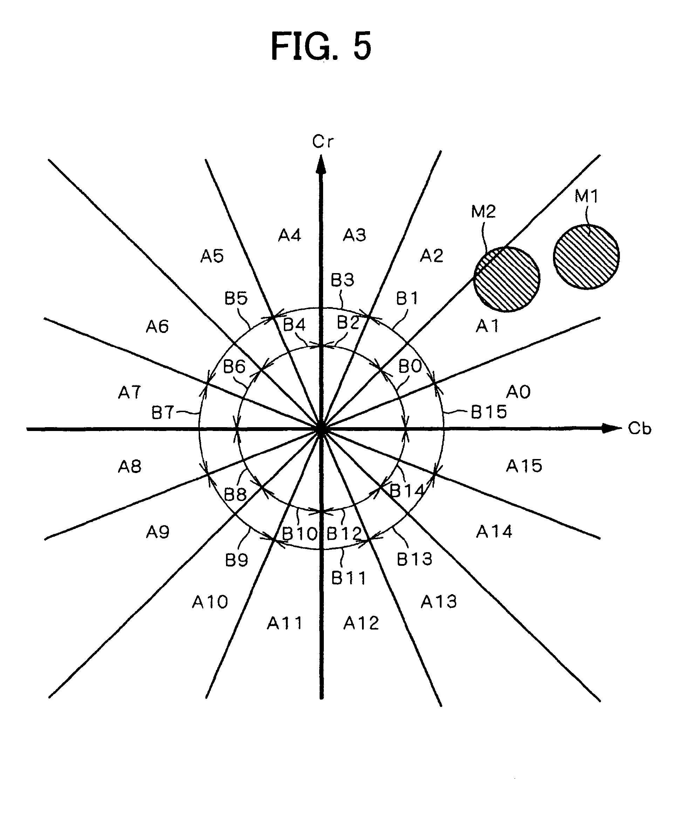

The color plane dividing unit 121 divides the color plane for defining the color difference component (namely, CbCr plane) and defines a plurality of color areas Ai (i= 0, 1, 2, ..N). More specifically, the color plane is divided into (for example, 16 divisions (N = 15)) radially around the original point (such as achromatic axis) of the color plane (see Fig. 5). Note that in the following, as exemplified in Fig. 5, the color plane is equally divided into 16 divisions radially around the original point, and each color area is shown as color area A0, color area A1, .. and color area A15 counterclockwise from a first quadrant.

The first beginning area data acquisition unit 122 acquires the image data of the areas of a front half (first beginning areas P1(1) to P1(n)) (see Fig. 2) out of the beginning areas P1(1) to P1(n), P2(1) to P2(n), as the "first beginning area data dP1". More specifically, the image processing unit 16 applies a prescribed processing (a matrix operation process for converting the RGB image data to the YCbCr image data and each kind of correcting process) to the image data of the RGB colormetric system acquired by scanning the first beginning areas P1 (1) to P1 (n) by the image scanning unit 17, and the image data (YCbCr image data) thus obtained is acquired as a first beginning area data dP1.

Note that the image processing unit 16 may create the data for every "unit image" from the data for every "pixel", by a prescribed average processing. The "unit image" is the image composed of n-numbers of mutually adjacent pixels (n is a natural number of 2 or more), and the data of the unit image shows an average value of the n-numbers of pixel data included in the unit image. When the image processing unit 16 averages the pixel data, a first beginning area data acquisition unit 111 acquires the data of the unit image of the first beginning area as the first beginning area data dP1.

Note that it may be constituted, so that all data included in the first beginning areas P1(1) to P1(n) are not acquired as the first beginning area data dP1, but only the data detected as the background color image data by the background color luminance discriminating unit 101 out of all data included in the first beginning areas P1(1) to P1(n), is acquired as the first beginning area data dP1.

The first evaluation unit 123 serves as a function unit that evaluates each color area Ai(i= 0, 1, 2, ..), and has a single area element counting unit 1231 and a single area evaluation unit 1232.

The single area element counting unit 1231 counts the number of elements of the first beginning area data dP1 belonging to each color area Ai(i= 0, 1, 2, ..).

The single area evaluation unit 1232 evaluates each color area Ai(i= 0, 1, 2, ..). More specifically, the single area evaluation unit 1232 decides whether the number of elements (such as the number of elements counted by the single area element counting unit 1231) of the first beginning area data dP1 belonging to each color area Ai(i= 0, 1, 2, ..) exceeds a first threshold value W1, and when it is so decided that the number of elements belonging to aforementioned each color area exceeds the threshold value W1, extracts this color area and gives thereto a positive evaluation.

Note that the threshold value W1 is a previously set arbitrary value, and is set at a value capable of eliminating the color area, in which the image data attributable to something other than the ground color (namely, the image data of apparently small number of elements having the same color component) (for example, dust that exists in the first beginning areas P1(1) to P1(n)) are distributed, from a candidate of the color area of the background color. A discrimination standard corresponding to the threshold value W1 may be, for example, the number of elements itself or may be defined as a ratio of the number of elements (the ratio of occupancy of the number of elements in the whole number of elements included in the first beginning area data dP1, which is preferably about 5%). For example, when the threshold value W1 is set at the ratio of the number of elements = 5%, the positive evaluation is given to the color area in which the number of elements exceeding 5% of the whole number of elements included in the first beginning area data dP1 are distributed.

The second evaluation unit 124 serves as a function unit that evaluates each color area Ai(i= 0, 1, 2, ...), and has a multiple area elements counting unit 1241 and a multiple area evaluation unit 1242.

The multiple area elements counting unit 1241 defines the area constituted of the mutually adjacent plurality of (two in this embodiment) color areas Ai and Aj (wherein j= i + 1(0 ≤ i ≤ N - 1), j = 0(i = N)) out of the color areas Ai(i= 0, 1, 2, ..N), as a multiple area Bi (i= 0, 1, 2, ..N) (see Fig. 5). The multiple area elements counting unit 1241 counts the number of elements of the first beginning area data dP1 belonging to each area of the multiple area Bi(i= 0, 1, 2, ..N).

The multiple area evaluation unit 1242 evaluates each color area Ai(i= 0, 1, 2, ..). More specifically, the multiple area evaluation unit 1242 decides whether the number of elements of the first beginning area data dP1 (namely, the number of elements counted by the multiple area element counting unit 1241) belonging to each area of the multiple area Bi(i= 1, 2, ..) exceeds the second threshold value W2, and when it is so decided that the number of elements belonging to this area exceeds the threshold value W2, extracts this multiple area and gives the positive evaluation to each of the plurality of color areas included in these areas.

However, in spite of a case that each color area Ai belongs to two multiple areas B(i-1) and Bi (however, multiple areas B15 and B0 in case of a color area A0) (namely, each color area Ai is included in each of the two multiple areas Bi(i - 1) and Bi) (see Fig. 5), when the positive evaluation is given to either one of these two multiple areas B(i - 1) and Bi, the multiple area evaluation unit 1242 decides that the positive evaluation is given to this color area Ai.

Note that the threshold value W2 is a previously set arbitrary value, and is set at a value capable of extracting the image data attributable to the background color (namely, the image data with sufficiently many numbers of elements having the same color difference components and estimated to be the background color). The discrimination standard corresponding to the threshold value W2 may be, for example, the number of elements itself or may be defined as the ratio of the number of elements (the ratio of occupancy of the number of elements in the whole numbers of pixels included in the first beginning area data dP1, which is preferably about 60 to 70%). For example, when the threshold value W2 is set at the ratio of the number of elements = 70%, the positive evaluation is given to the multiple area in which the number of elements exceeding 70% of the whole numbers of elements included in the first beginning area data dP1 are distributed.

Generally, when the values are compared by the same expression unit (for example, by the number of pixel elements or an occupancy ratio in the whole numbers of pixels), the second threshold value W2 is set larger than the first threshold value W1. Preferably, when the number of the color area forming each area of the multiple area is set at "m", the second threshold value W2 is set larger than "m" times of the first threshold value W1.

In a case that by performing such a second stage detection, a background color M2 is distributed across the mutually adjacent color areas (A1 and A2 in the example of Fig. 5 as will be described later), and even if the number of pixels of the background color in one color area A2 is not so large, when the number of these pixels is added to the number of pixels of the background color in the color area A1 that adjacent to the color area A2, there is the number of pixels capable of discriminating this color area to be the area of the background color, then, the threshold value W1 detected in each color area A1, A2 is set relatively smaller, and "candidates of the background color" are collected, and whether an assembly thereof forms a relatively large number of pixels in the multiple area B1 is discriminated, thereby specifying this multiple area B1 as the area of the background color.

The color area specifying unit 125 extracts the color area, to which the positive evaluation is given, from the first evaluation unit 123 and the second evaluation unit 124, and specifies this color area to be the color area of the background color (background color area Ab).

The second beginning area data acquisition unit 126 acquires the image data of a latter half area (second beginning areas P2(1) to P2(n)) (see Fig. 2) of the beginning areas P1(1) to P1(n), P2(1) to P2(n), as a "second beginning area data dP2". More specifically, the image data (YCbCr image data) is acquired as the second beginning area data dP2, the YCbCr image data being obtained by applying a prescribed processing by the image processing unit 16, such as the matrix operation process for converting the RGB image data to the YCbCr image data, each kind of correction process, and average process, etc. to the image data of the RGB colormetric system acquired by scanning the second beginning areas P2(1) to P2(n) by the image scanning unit 17.

The color difference maximum/minimum value recording unit 127 detects the data belonging to the background color area Ab out of the second beginning area data dP2, as the data attributable to the background color of the document (background color image data), and records the color difference component of this data (namely, component Cb and component Cr) as the maximum value (or the minimum value) of the color difference of the background color (background color difference). More specifically, first, the background color area Ab is specified. Namely, the background color area Ab is specified by receiving from the color area specifying unit 125 a notice of reporting any one of 16 color areas on the color plane to which the background color Ab belongs.

Subsequently, whether each data included in the second beginning area data dP2 acquired by the second beginning area data acquisition unit 126 belongs to any one of a plurality of color areas Ai(i= 0, 1, 2, ..) is decided. Therefore, the data decided to belong to the background color area Ab is extracted as the background color image data. When the color difference value of the extracted background color image data is a value larger than the maximum value of the background color difference recorded at present, the color difference value of this data is recorded as a new maximum value. In addition, when the color difference value of the extracted background color image data is a value smaller than the minimum value of the background color difference recorded at present, the color difference value of this data is recorded as a new minimum value.

### <2. processing operation>

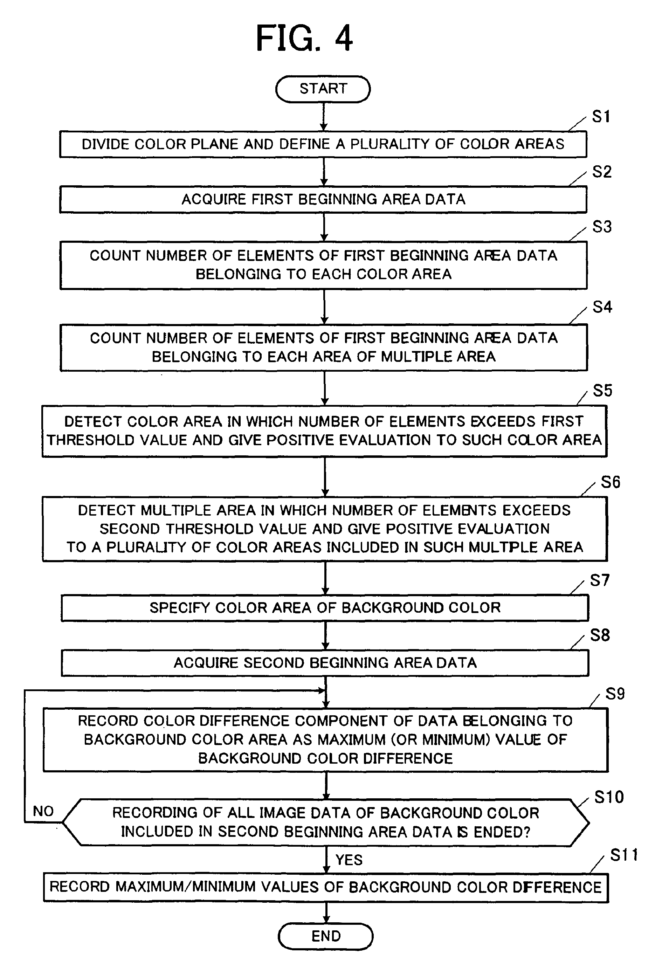

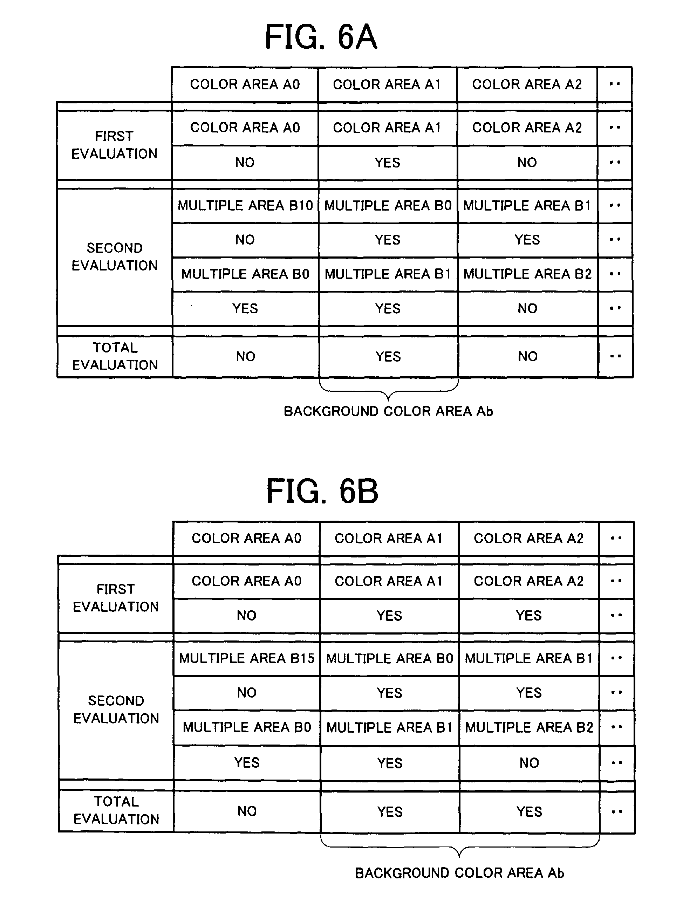

Next, explanation will be given for background color discrimination processing performed as one process of the color discrimination processing in the digital multifunction peripheral 1, with reference to Fig. 4 to Fig. 6. Fig. 4 is a view illustrating a flow of the background color discrimination processing. Fig. 5 is a view schematically illustrating the color plane. Fig. 6A and Fig. 6B are views explaining the background color discrimination processing, respectively.

First, the color plane dividing unit 121 divides the color plane for defining the color difference component of the image data, and defines the plurality of color areas Ai(i= 0, 1, 2, ..N(N = 15 in a case of Fig. 5)) (step S1).

Subsequently, the first beginning area data acquisition unit 122 acquires the first beginning area data dP1 (step S2). Note that in a pre-stage of performing the processing of step S1 (or in parallel to the processing of step S1), the processing of detecting the background color image data out of the whole data included in the first beginning area P1(1) to P1 (n) is executed by the background luminance discriminating unit 101, and the background color image data thus detected may be acquired as the first beginning area data dP1 by the background color difference discriminating unit 102 in step S1.

Subsequently, the single area element counting unit 1231 counts the number of elements of the first beginning area data dP1 belonging to each color area Ai(i= 0, 1, 2, ..) (step S3).

Subsequently, the multiple area element counting unit 1241 counts the number of elements of the first beginning area data dP1 belonging to each area of the multiple area Bi(i= 1, 2, ..) (step S4).

Subsequently, the single area evaluation unit 1232 decides whether the number of elements of the first beginning area data dP1 belonging to this area (namely, the number of elements counted by the single area element counting unit 1231 in step S3) exceeds the first threshold value W1. When the color area is detected, in which the number of elements of the image data exceeds the first threshold value W1, the single area evaluation unit 1232 gives the positive evaluation to this color area (step S5).

Subsequently, the multiple area evaluation unit 1242 decides whether a multiple area in which the number of elements of the first beginning area data dP1 belonging to this area (namely, the number of elements counted by the multiple area element counting unit 1241 in step S4) exceeds the second threshold value W2 is detected. When the multiple area in which the number of elements exceeds the second threshold value W2 is detected, the multiple area evaluation unit 1242 gives the positive evaluation to two color areas included in this multiple area (step S6).

Subsequently, the color area specifying unit 125 extracts the color area to which the positive evaluation is given from the first evaluation unit 123 in step S5 and the positive evaluation is given from the second evaluation unit 124 in step S6, and specifies this color area as the background color area Ab (step S7).

Here, Fig. 5 and Fig. 6A are referenced. For example, when the first beginning area data dP1 are uniformly distributed in the area M1 included in the color area A1, in step S5, the first evaluation unit 123 gives the positive evaluation to the color area A1. Also, in step S6, the second evaluation unit 124 gives the positive evaluation to two color areas A0 and A1 included in the multiple area B0 and gives the positive evaluation to two color areas A1 and A2 included in the multiple area B1. In this case, in step S7, the color area specifying unit 125 specifies the color area A1 as the background color area Ab.

Also here, Fig. 5 and Fig. 6B are referenced. For example, when the first beginning area data dP1 are uniformly distributed in the area M2 over the plurality of areas A1 and A2, in step S5, the first evaluation unit 123 gives the positive evaluation to the color area A1 and the color area A2. In addition, in step S6, the second evaluation unit 124 gives the positive evaluation to the two color areas A0 and A1 included in the multiple area B0, and gives the positive evaluation to the two color areas A1 and A2 included in the multiple area B1. In this case, in step S7, the color area specifying unit 125 specifies the color area A1 and the color area A2 as the background color area Ab.

As an example, the following case is assumed. That is, the pixels in the color area A1 out of the pixels belonging to the area M2 occupies 10% in the whole numbers of pixels, and the pixels in the area A2 occupies 65% in the whole numbers of pixels. At this time, as a comparison technique, when the background color is detected by setting a threshold value W0 at 70% in the individual color area and using this threshold value W0, either one of the areas A1 and A2 shows a negative result as the background color. However, as is shown in this embodiment, when two-stage detection is performed, with the threshold value W1 set at 5% and the threshold value W2 set at 70% as the occupancy ratio in the whole number of pixels, (in order to satisfy 10% > 5% = W1, 65% > 5% = w1), the positive evaluation is given to both of the areas A1 and A2 as candidates of a part of the background color. Then, (in order to satisfy 10% + 65% = 75% > 70% = W2), the positive evaluation is given to a set of them also, as the background color.

Fig. 4 is referenced again. Subsequently, the second beginning area data acquisition unit 126 acquires the second beginning area data dP2 (step S8).

Subsequently, the color difference maximum/minimum value recording unit 127 detects the data belonging to the background color area Ab specified in step S7 as the background color image data, and records the color difference component of this data as the maximum value (or minimum value) of the background color difference (step S9).

When recording of all background color image data included in the second beginning area data dP2 is ended (YES in step S10), the color difference maximum/minimum recording unit 127 stores the maximum/minimum values recorded at this time as the maximum/minimum values of the background color difference (step S11). The color difference area of the background color is specified by the above-described processing.

### <3. Advantage>

According to the above-described embodiments, in specifying the color area of the background color (background color area Ab) out of the plurality of color areas Ai(i= 1, 2..) defined on the color plane for defining the color component, whether each color area Ai(i= 0, 1, 2, ..) is the color area of the background color is decided, in consideration of not only the number of elements of the image data belonging to each color area Ai(i= 1, 2..) but also the number of elements of the image data belonging to the multiple area Bi(i= 0, 1, 2, ..), being the area constituted of the color area Ai and a color area Aj adjacent to this color area Ai. Accordingly, even when the image data of the background color are distributed over the plurality of color areas, these plurality of color areas are extracted as the color areas of the background color and the color areas of the background color can be accurately specified.

In addition, according to the above-described embodiments, the color plane is radially divided around the original point (namely, around the achromatic axis). Namely, a plurality of color areas Ai(i= 0, 1, 2, ..) are arranged radially around the original point of the color plane. Therefore, even if the image data attributable to the background color are distributed at a position far from the original point of the color plane, the hue of the background color can be accurately detected.

In addition, according to the above-described embodiments, 16 color areas are acquired by dividing the color plane into 16. When the color area is subdivided, while there is an advantage that the background color area can be further accurately specified, there is also a drawback that the discrimination processing is complicated. According to inventors of the present invention, the color plane is divided into 16, and one color area or mutually adjacent two color areas are detected as the background color areas. Therefore, it is confirmed that the background color area can be appropriately discriminated, with relatively simple discrimination processing.

In addition, according to the above-described embodiments, the color difference maximum/minimum value recording unit 127 detects the data belonging to the background color area Ab of the second beginning area data dP2, as the background color image data, and records the color difference component of this data as the maximum/minimum values of the color of the background. Therefore, the color difference area of the background color (color component area) can be accurately and easily specified.

In addition, according to the above-described embodiments, first, existence/nonexistence of the background color is discriminated and the background color area Ab is specified, based on the image data acquired by scanning the front half areas (the first beginning areas P1(1) to P1(n)) of the beginning areas P1(1) to P1(n), P2(1) to P2(n) , and subsequently, the maximum value and the minimum value of the background color difference are specified, based on the image data acquired by scanning the latter half areas (the second beginning areas P2(1) to P2(n)) of the beginning areas P1(1) to P1(n), P2(1) to P2(n).

With the aforementioned structure, the discrimination processing can be performed while sequentially using the image data sequentially acquired by scanning the document by the CCD line sensor 171 (Fig. 1) (more specifically, the image data acquired by the CCD line sensor 171 and then further subjected to correction processing of misalignment of the image based on a position of each RGB line sensor). Namely, there is no necessity for accumulating scanned image data which is further subjected to scanning for discrimination. Accordingly, the discrimination processing can be promptly performed.

[Second embodiment]

### <1. Structure>

### <1-1. Digital multifunction peripheral>

Explanation will be given for the structure of a digital multifunction peripheral 2 incorporating the function of the image processing apparatus corresponding to the second embodiment of the present invention. The digital multifunction peripheral 2 according to the second embodiment is constituted as a multifunction peripheral (MFP) in the same way as the digital multifunction peripheral 1 according to the first embodiment (see Fig. 1), and has each structure shown in Fig. 1. Therefore, the point different from the first embodiment will be explained hereafter, and the explanation for the point not different from the first embodiment is omitted. Also, when the same constitution part is indicated, a reference mark used in the explanation of the first embodiment is used in some cases.

In the same way as the digital multifunction peripheral 1 according to the first embodiment, the digital multifunction peripheral 2 has a function (so-called ACS function) of discriminating the color of multi-level image data, and receives this color discrimination result and selects the processing mode for processing this image data. In the following, explanation will be given for a background color discriminating function according to a color discriminating function realized by the digital multifunction peripheral 2.

### <1-2. Structure regarding the background color discrimination>

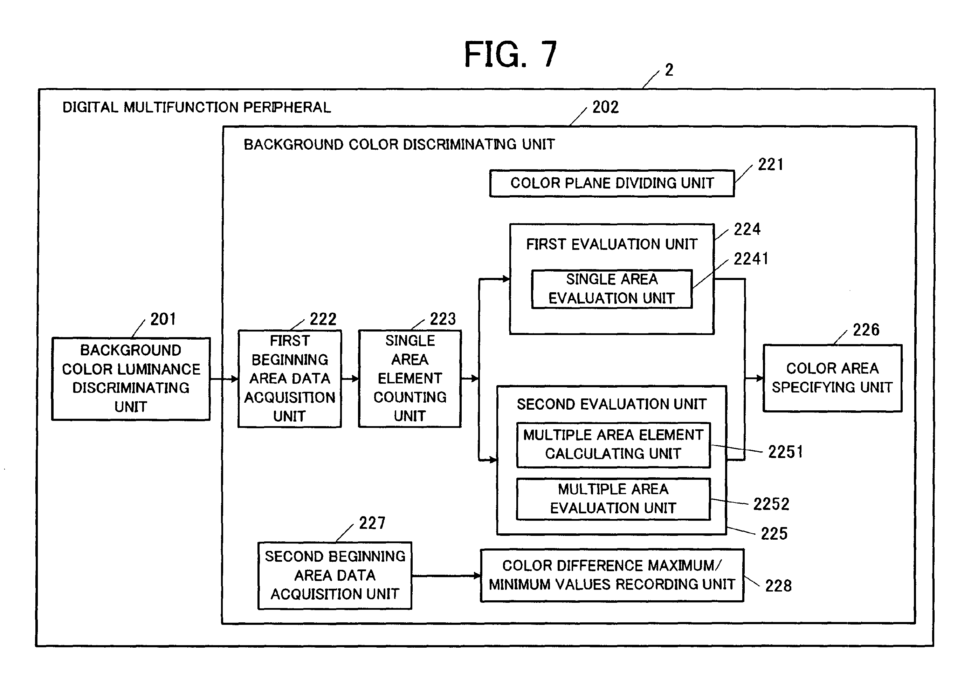

The background color discriminating function in the digital multifunction peripheral 2 will be explained, with reference to Fig. 7. Fig. 7 is a block diagram illustrating the structure regarding the background color discrimination. The digital multifunction peripheral 2 includes a background color luminance discriminating unit 201 that detects a brightness component of the background color, and a background color difference discriminating unit 202 that detects the color component of the background color. The background color area in the YCbCr color space is detected, by a luminance area of the background color detected by the background color luminance discriminating unit 201 and the color difference area of the background color detected by the background color discriminating unit 202. Note that the aforementioned each function unit is a constituent element realized by executing the program by the controlling unit.

### <Background color luminance discriminating unit>

The background color discriminating unit 201 has the same structure as that of the background color discriminating unit 101 according to the first embodiment, and therefore explanation therefore is omitted.

### <Background color difference discriminating unit>

The background color difference discriminating unit 202 has a color plane dividing unit 221, a first beginning area data acquisition unit 222, a single area element counting unit 223, a first evaluation unit 224, a second evaluation unit 225, a color area specifying unit 226, a second beginning area data acquisition unit 227, and a color difference maximum/minimum value recording unit 228. Each unit of the color plane dividing unit 221, the first beginning area data acquisition unit 222, the color area specifying unit 226, the second beginning area data acquisition unit 227, and the color difference maximum/minimum value recording unit 228 is the same as the color plane dividing unit 121, the first beginning area data acquisition unit 122, the color area specifying unit 125, the second beginning area data acquisition unit 126, and the color difference maximum/minimum value recording unit 127 according to the first embodiment. Also, the single area element counting unit 223 is the same as the single area counting unit 1231.

The first evaluation unit 224 is a function unit that evaluates each color area Ai(i= 0, 1, 2, ..), and has a single area evaluation unit 2241. The single area evaluation unit 2241 is the same as the singe area evaluation unit 1232 according to the first embodiment.

The second evaluation unit 225 is a function unit that evaluates each color area Ai(i= 0, 1, 2, ..), and has a multiple area element calculating unit 2251 and a multiple area evaluation unit 2252.

The multiple area element calculating unit 2251 calculates the number of elements of the first beginning area data dP1 belonging to each area of the multiple area Bi (i=0. 1, 2, ..N), based on the number of elements counted by the single area element counting unit 223 (namely, the number of elements of the first beginning area data dP1 belonging to each color area Ai(i= 0, 1, 2, ..). More specifically, the value of the number of elements of the first beginning area data dP1 belonging to each of the two color areas Ai and Aj (wherein j=i+1(0 ≤ i ≤ N - 1), j=0(i=N)) constituting the multiple area Bi(i= 0, 1, 2, ..N) is acquired by the single area element counting unit 223, a sum of two values thus acquired is counted, and the number of elements of the first beginning area data dP1 belonging to the multiple area Bi(i= 0, 1, 2, ..N) is acquired.

In the same way as the multiple area evaluation unit 1232 according to the first embodiment, the multiple area evaluation unit 2252 evaluates each color area Ai(i= 0, 1, 2, ..). More specifically, the multiple area evaluation unit 2252 decides whether the number of elements of the first beginning area data dP1 belonging to each area of the multiple area Bi(i= 1, 2, ..) (namely, the number of elements calculated by the multiple area element calculating unit 2251) exceeds the second threshold value W2, and when it is so decided that the number of elements exceeds the threshold value W2, extracts this multiple area and gives the positive evaluation to each of the plurality of color areas included in this multiple area.

### <2. Operation>

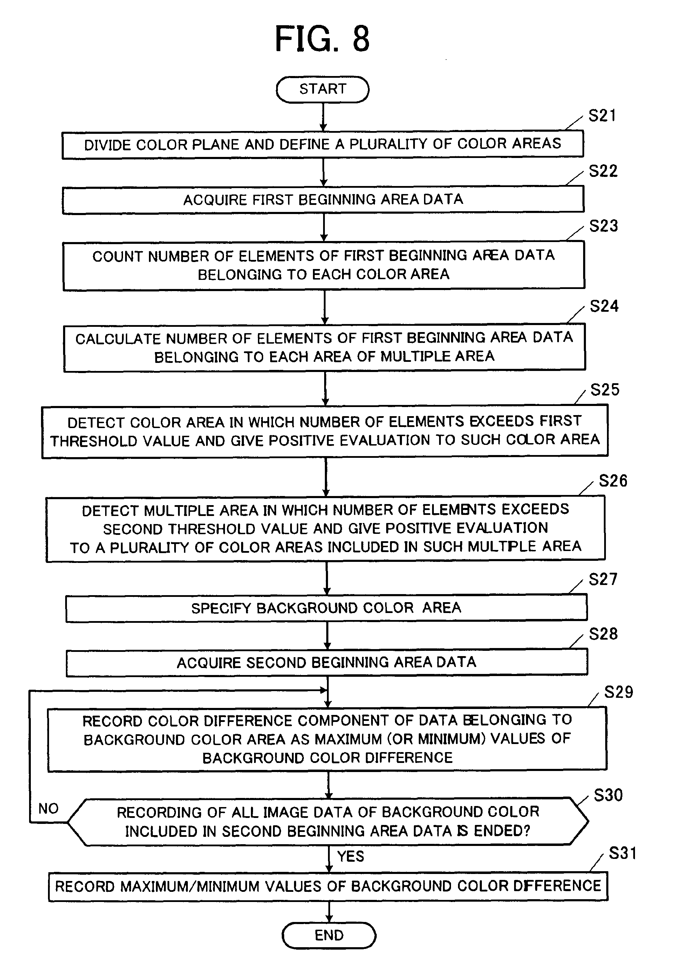

Next, explanation will be given for the background color discrimination processing performed as one process of the color discrimination processing in the digital multifunction peripheral 2, with reference to Fig. 8. Fig. 8 is a view illustrating the flow of the background color discrimination processing.

Each processing of step S21 to step S23 is the same as each processing of step S1 to step S3 explained in the first embodiment. Namely, first, the color plane dividing unit 221 divides the color plane for defining the color difference component of the image data, and defines a plurality of color areas Ai(i=0, 1, 2, ..N) (step S21), and subsequently, the first beginning area data acquisition unit 222 acquires the first beginning area data dP1 (step S22). Then, the single area element counting unit 223 counts the number of elements of the first beginning area data dP1 belonging to each color area Ai(i= 0, 1, 2, ..) (step S23).

Subsequently, based on the number of elements counted by the single area element counting unit 223, the multiple area element calculating unit 2251 calculates the number of elements of the first beginning area data dP1 belonging to each area of the multiple area Bi(i= 0, 1, 2, ..N).

Subsequently, the single area evaluation unit 2241 decides whether the color area in which the number of elements of the first beginning area data dP1 belonging to this area (namely, the number of elements counted by the single area element counting unit 223 in step S23) exceeds the first threshold value W1, and when the color area is detected, in which the number of elements of the image data exceeds the first threshold value W1, the positive evaluation is given to this color area (step S25).

Subsequently, the multiple area evaluation unit 2252 decides whether the multiple area in which the number of elements of the first beginning area data dP1 belonging to this area (namely, the number of elements calculated by the multiple area element calculating unit 2251 in step S24) exceeds the second threshold value W2 is detected, and when the multiple area in which the number of elements exceeds the second threshold value W2 is detected, the positive evaluation is given to the two color areas included in this multiple area (step S26).

Subsequently, the color area specifying unit 226 extracts the color area to which the positive evaluation is given from the first evaluation unit 224 in step S25, and the positive evaluation is given from the second evaluation unit 225 in step S26, and specifies this color area as the background color area Ab (step S27).

Each processing of the subsequent step S28 to step S31 is the same as each processing of the step 8 to step S11 explained in the first embodiment. Namely, the second beginning area data acquisition unit 227 acquires the second beginning area data dP2 (step S28). Subsequently, the color difference maximum/minimum value recording unit 228 detects the data belonging to the background color area Ab specified in step S27 out of the second beginning area data dP2, as the background color image data, and records the color difference component of this data as the maximum value (or minimum value) of the background color difference (step S29) . Then, when recording of all the background color image data included in the second beginning area data dP2 is ended (YES in step S30), the color difference maximum/minimum value recording unit 228 stores the maximum value/minimum value recorded at this time as the maximum value/minimum value of the background color difference (step S31).

### [Modified example]

In the above-described first embodiment, each processing such as a count processing of the number of elements (the number of elements of the first beginning area data dP1 belonging to the color area Ai) by the single area element counting unit 1231 (step S3), and the count processing of the number of elements (the number of elements of the first beginning area data dP1 belonging to the multiple area Bi) by the multiple area element counting unit 1241 (step S4) are sequentially performed. However, it is desirable to execute the aforementioned each processing in parallel. In addition, it is also desirable to execute the evaluation processing of the color area Ai by the single area evaluation unit 1232 (step S5), and the evaluation processing of the multiple area Bi by the multiple area evaluation unit 1242 (step S6) in parallel. With this structure, the speed of the background color discrimination processing can be increased.

In addition, in the above-described each embodiment, although the multiple area Bi is constituted of the mutually adjacent two color areas Ai and Aj, it may be constituted of the mutually adjacent two or more color areas. In addition, the number of the color areas included in each area of the multiple area Bi may not necessarily be the same.

In addition, in each of the above-described embodiments, although the background color is discriminated based on the YCbCr image data, the background color can be similarly discriminated also, based on the image data of each kind of colormetric system (such as the L*a*b* colormetric system, YIQ colormetric system, Luv colormetric system, etc) in which the brightness component and the color component are separated.

In addition, in each of the above-described embodiments, the discrimination of the background color is performed based on the data acquired by scanning the beginning area of the document. However, the present invention is not limited thereto. The discrimination of the background color may be performed by using a rear end of the object image and a part of a right tip end of the image data.

In addition, according to each of the above-described embodiments, the image data used for the processing of discriminating the existence/nonexistence of the background color and specifying the background color area Ab, and the image data used for the processing of specifying the maximum/minimum values of the background color difference, are defined as the image data acquired by scanning mutually different areas. However, both processing may be performed by using the same image data.

In addition, in the above-described each embodiment, the background color luminance discriminating unit 101 and the background color difference discriminating unit 102 are the constituent elements realized by executing the program by the controlling unit 11. However, they may be realized by a wired logic circuit.

While the present invention has been described with respect to embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. An image processing apparatus having a function of detecting a background color of a document based on image data of a colormetric system in which a brightness component (Y) and color components (Cb, Cr) are separated, comprising:
a color plane dividing unit (121) that divides a color plane for defining the color components (Cb, Cr) into a plurality of color areas (A);
a first element counting unit (1231) that counts the number of elements of the image data belonging to each of the plurality of color areas;
a single area evaluation unit (1232) that extracts a color area in which the number of elements of the image data exceeds a first threshold value, and gives a positive evaluation to the extracted color area;
a second element counting unit (1241) that counts the number of elements of the image data belonging to each area of the multiple area (B), where an area constituted of mutually adjacent plurality of color areas (A) of the plurality of color areas is set as a multiple area (B);
a multiple area evaluation unit (1242) that extracts the multiple area in which the number of elements of the image data belonging to this area exceeds a second threshold value, and gives the positive evaluation to a plurality of color areas included in the extracted multiple area, and
a color area specifying unit (125) that specifies a color area, to which the positive evaluation is given from the single area evaluation unit (1232) and the multiple area evaluation unit (1242), as the color area of background color.

2. An image processing apparatus having a function of detecting a background color of a document based on image data of a colormetric system in which brightness component (Y) and color components (Cb, Cr) are separated, and having an element counting unit (223) that divides a color plane for defining the color components into a plurality of color areas (A), and counts the number of elements of the image data belonging to each of the plurality of color areas, and a single area evaluation unit (2241) that extracts a color area in which the number of elements of the image data belonging to this area exceeds a first threshold value and gives a positive evaluation to the extracted color area, the image processing apparatus comprising:
a multiple area element calculating unit (2251) that calculates the number of elements of the image data belonging to each area of a multiple area, being an area constituted of mutually adjacent plurality of color areas of a plurality of color areas, based on the number of elements counted by the element counting unit (223);
a multiple area evaluation unit (2252) that extracts the multiple area (B) in which the number of elements of the image data belonging to this area exceeds a second threshold value, and gives the positive evaluation to the plurality of color areas (A) included in the extracted multiple area(B); and
a color area specifying unit (226) that specifies the color area, to which the positive evaluation is given from the single area evaluation unit (2241) and a multiple area evaluation unit (2252), as the color area of background color.

3. The image processing apparatus according to claim 1 or 2, wherein the plurality of color areas (A) are arranged radially around a center of an achromatic axis of the color plane.

4. The image processing apparatus according to claim 3, wherein each of the plurality of color areas (A) belongs to arbitrary two areas of the multiple area (B).

5. The image processing apparatus according to any one of claims 1 to 4, comprising background color component specifying units (127, 228) that extract the image data belonging to the color area (A) of background color as background color image data, out of the image data acquired by scanning a prescribed area (P) of the document, then specify a maximum value of values of the color component of the background color image data as the maximum value of the color component of background color, and specify a minimum value of the values of the color component of the background color image data as the minimum value of the color component of background color.

6. A background color detection method including a first element counting step (S3) for dividing a color plane for defining color components into a plurality of color areas (A), based on image data of a colormetric system in which a brightness component (Y) and color components (Cb, Cr) are separated, and counting the number of elements of the image data belonging to each of the plurality of color areas (A), the method comprising:
a second element counting step (S4) for counting the number of elements of the image data belonging to each area of a multiple area (B), when an area constituted of mutually adjacent plurality of color areas of the plurality of color areas (A) is set as the multiple area (B);
a single area evaluation step (S5) for extracting a color area (A) in which the number of elements of the image data belonging to this area exceeds a first threshold value, and giving a positive evaluation to the extracted color area (A);
a multiple area evaluation step (S6) for extracting the multiple area in which the number of elements of the image data belonging to this area exceeds a second threshold value and giving the positive evaluation to the plurality of color areas included in the extracted multiple area (B); and
a color area specifying step (S7) for specifying the color area, to which the positive evaluation is given in the single area evaluation step and the positive evaluation is given in the multiple area evaluation step, as the color area of background color.

7. A method of detecting a background color including an element counting step (S23) for dividing a color plane for defining color components (Cb, Cr), and counting the number of elements of the image data belonging to each of the plurality of color areas, based on image data of a colormetric system in which a brightness component (Y) and color components (Cb, Cr) are separated, the method including:
a multiple area element calculating step (S24) for calculating the number of elements of the image data belonging to each area of a multiple area (B), being an area constituted of mutually adjacent plurality of color areas of the plurality of color areas, based on the number of elements counted in the element counting step (S23);
a single area evaluation step (S25) for extracting a color area in which the number of elements of the image data belonging to this area exceeds a first threshold value and giving a positive evaluation to this color area;
a multiple area evaluation step (S26) for extracting a multiple area in which the number of elements of the image data belonging to this area exceeds a second threshold value and giving the positive evaluation to the plurality of color areas included in the multiple area; and
a color area specifying step (S27) for specifying the color area to which the positive evaluation is given in the single area evaluation step (S26) and the positive evaluation is given in the multiple area evaluation step (S26), as the color area of background color.
